# EUROPÄISCHE PATENTANMELDUNG

(11) **EP 4 178 210 A1**
(43) Veröffentlichungstag der Anmeldung: **10.05.2023**
(21) Anmeldenummer: 21206239.2
(22) Anmeldetag: 03.11.2021
(51) Int. Cl.: H04N 21/422, H04N 21/442, H04N 21/658, H04N 21/84

(54) **SENSORISCHES ERMITTELN EINES INTERESSES AN EINEM DIGITALEN INHALT**

(71) Anmelder: Deutsche Telekom AG, 53113 Bonn (DE)
(72) Erfinder: MINOW, Jascha, 64625 Bensheim (DE); EL MALLOUKI, Said, 56329 St.Goar (DE); JAHN, Carl, 65191 Wiesbaden (DE)
(74) Vertreter: RDL Patentanwälte PartG mbB

(57) **Zusammenfassung**

Verfahren zum Ermitteln eines Interesses an einem digitalen Inhalt, bei dem ein Endgerät eines Nutzers dem Nutzer während eines Anzeigezeitraums einen digitalen Inhalt anzeigt und ein Sensor während des Anzeigezeitraums ein Reagieren des Nutzers auf den angezeigten digitalen Inhalt erfasst und von dem Reagieren abhängige und mit zu dem Anzeigezeitraum gehörigen Zeitstempeln versehene Sensordaten als zu einem Interesse des Nutzers an dem angezeigten digitalen Inhalt korrespondierende Reaktionsdaten bereitstellt, Verfahren zum Bewerten eines digitalen Inhalts, Verfahren zum Empfehlen eines digitalen Inhalts, Verfahren zum Fördern eines Konsums eines digitalen Inhalts sowie Computerprogrammprodukt.

## Beschreibung

Die Erfindung betrifft ein Verfahren zum Ermitteln eines Interesses an einem digitalen Inhalt, bei dem ein Endgerät eines Nutzers dem Nutzer während eines Anzeigezeitraums einen digitalen Inhalt anzeigt und ein Sensor während des Anzeigezeitraums ein Reagieren des Nutzers auf den angezeigten digitalen Inhalt erfasst und von dem Reagieren abhängige und mit zu dem Anzeigezeitraum gehörigen Zeitstempeln versehene Sensordaten als zu einem Interesse des Nutzers an dem angezeigten digitalen Inhalt korrespondierende Reaktionsdaten bereitstellt. Ferner betrifft die Erfindung ein Verfahren zum Bewerten eines digitalen Inhalts, ein Verfahren zum Empfehlen eines digitalen Inhalts, ein Verfahren zum Fördern eines Konsums eines digitalen Inhalts sowie ein Computerprogrammprodukt.

Anbieter von digitalen Inhalten, welche mittels eines Endgeräts konsumiert werden, profitieren davon, von einem den digitalen Inhalt konsumierenden Nutzer eine Bewertung des digitalen Inhalts zu erhalten. Denn eine positive Bewertung des digitalen Inhalts kann weitere Nutzer zu einem Konsumieren des digitalen Inhalts bewegen. Ferner profitieren die Anbieter davon, die bereitgestellten digitalen Inhalte gezielt solchen Nutzern zu empfehlen, welche an dem digitalen Inhalt interessiert sind. Denn solche Nutzer werden den digitalen Inhalt mit einer großen Wahrscheinlichkeit konsumieren. Überdies profitieren die Anbieter davon, für Nutzer, welche an einem bereitgestellten digitalen Inhalt interessiert sind, einen den bereitgestellten Inhalt betreffenden Konsumanreiz bereitzustellen. Denn der Konsumanreiz kann das Interesse des Nutzers an dem digitalen Inhalt in einen Konsum des digitalen Inhalts wandeln.

Unter einem digitalen Inhalt wird hier ein von einem Endgerät anzeigbarer Inhalt verstanden, dessen Anzeigen an sich bereits ein Konsumieren darstellt, beispielsweise ein abrufbarer Videostrom oder Audiostrom, oder dessen Anzeigen einem Konsumieren eines von dem digitalen Inhalt verschiedenen Produkts unmittelbar vorausgeht, beispielsweise Produktseiten eines Online-Shops zum Bestellen des Produkts.

Die genannten Anwendungsfälle erfordern allerdings eine Kenntnis eines Interesses eines Nutzers an dem digitalen Inhalt. Häufig kann der Nutzer sein Interesse an dem digitalen Inhalt nach dem Konsumieren des digitalen Inhalts durch Abgeben einer Bewertung zeigen. Jedoch bewerten relativ wenige Nutzer absichtsvoll aktiv einen konsumierten digitalen Inhalt.

Aufgrund dessen wird ein Interesse eines Nutzers an einem digitalen Inhalt ersatzweise oder ergänzend aus einem erfassten bisherigen Konsumverhalten des Nutzers oder aus einer Zugehörigkeit des Nutzers zu einer oder mehreren durch ein jeweiliges Konsumverhalten definierten Nutzergruppen indirekt abgeleitet.

Das auf diese Weise abgeleitete Interesse des Nutzers ist zumeist ungenau. Beispielsweise kann das erfasste bisherige Konsumverhalten nicht nur durch ein eigenes Interesse des Nutzers motiviert sein, sondern auch ein Konsumieren zu einem anderen Zweck bzw. zugunsten anderer oder ein gemeinschaftlich bestimmtes Konsumieren umfassen. Entsprechend entfalten insbesondere Empfehlungen digitaler Inhalte und Konsumanreize für digitale Inhalte, welche ausgehend von einem indirekt abgeleiteten Interesse bestimmt werden, häufig nicht die angestrebte Wirkung.

Es ist daher eine Aufgabe der Erfindung, ein Verfahren zum Ermitteln eines Interesses an einem digitalen Inhalt vorzuschlagen, welches ohne ein absichtsvolles aktives Mitwirken des Nutzers auskommt und eine hohe Präzision des ermittelten Interesses erreicht. Weitere Aufgaben der Erfindung sind, ein Verfahren zum Bewerten eines digitalen Inhalts, ein Verfahren zum Empfehlen eines digitalen Inhalts und ein Verfahren zum Fördern eines Konsums eines digitalen Inhalts vorzuschlagen sowie ein Computerprogrammprodukt bereitzustellen.

Ein Gegenstand der Erfindung ist ein Verfahren zum Ermitteln eines Interesses an einem digitalen Inhalt, bei dem ein Endgerät eines Nutzers dem Nutzer während eines Anzeigezeitraums einen digitalen Inhalt anzeigt und ein Sensor während des Anzeigezeitraums ein Reagieren des Nutzers auf den angezeigten digitalen Inhalt erfasst und von dem Reagieren abhängige und mit zu dem Anzeigezeitraum gehörigen Zeitstempeln versehene Sensordaten als zu einem Interesse des Nutzers an dem angezeigten digitalen Inhalt korrespondierende Reaktionsdaten bereitstellt. Das Verfahren beruht darauf, dass der Nutzer den digitalen Inhalt mittels des Endgeräts konsumiert und ein Sensor den Nutzer während des Konsumierens, d.h. gleichzeitig mit dem Konsumieren, überwacht.

Anhand der Zeitstempel können die Sensordaten und mithin Reaktionen des Nutzers auf den digitalen Inhalt dem Anzeigezeitraum zugeordnet werden. Infolgedessen lassen sich die von dem Sensor während des Anzeigezeitraums erfassten Reaktionen des Nutzers dem während des Anzeigezeitraums angezeigten digitalen Inhalt als eine unmittelbare Bewertung zuordnen.

Erfindungsgemäß stellt das Endgerät dem angezeigten digitalen Inhalt zugeordnete und mit zu dem Anzeigezeitraum gehörigen Zeitstempeln versehene Metadaten bereit überträgt das Endgerät die bereitgestellten Metadaten zu einem von dem Endgerät verschiedenen Server, überträgt der Sensor die bereitgestellten Reaktionsdaten zu dem Server und ermittelt ein Bewertungsmodul eines von dem Server betriebenen Bewertungsdiensts abhängig von den empfangenen Metadaten und den empfangenen Reaktionsdaten einen Interessenwert des digitalen Inhalts als das Interesse des Nutzers an dem angezeigten digitalen Inhalt. Der Bewertungsdienst, genauer gesagt ein Bewertungsmodul des Bewertungsdiensts, ist konfiguriert, die Metadaten und die Reaktionsdaten zu empfangen und einander anhand der jeweiligen Zeitstempel zuzuordnen, d.h. die Metadaten und die Reaktionsdaten zu synchronisieren.

Die Zeitstempel ermöglichen eine Gleichzeitigkeit nicht nur bezogen auf den Anzeigezeitraum im Ganzen, sondern auch auf jeden Zeitpunkt innerhalb des Anzeigezeitraums. Auf diese Weise lassen sich die erfassten Reaktionen des Nutzers bei einem während des Anzeigezeitraums veränderlichen digitalen Inhalt nicht nur dem angezeigten digitalen Inhalt als Ganzem, sondern auch einzelnen zeitlichen Teilen oder Abschnitten des angezeigten digitalen Inhalts zuordnen. Entsprechend ermittelt der Bewertungsdienst aus den Reaktionen des Nutzers auf den angezeigten digitalen Inhalt eine sehr differenzierte Bewertung des digitalen Inhalts.

Zu den hier angesprochenen Endgeräten gehören stationäre Endgerät wie ein Fernsehgerät (IPTV) oder ein Desktop-Rechner sowie mobile Endgeräte wie ein Notebook, ein Tablet oder ein Smartphone. Die Auflistung ist lediglich beispielhaft und nicht abschließend. Die Erfindung erstreckt sich auf jedes Endgerät, welches zum Anzeigen eines digitalen Inhalts konfiguriert ist.

Selbstverständlich kann eine Mehrzahl von Sensoren an dem Verfahren beteiligt sein, d.h. zwei oder mehr als zwei Sensoren. Je mehr Sensoren unterschiedliche Reaktionsdaten bereitstellen, desto präziser ist der von dem Bewertungsdienst ermittelte Interessenwert. Der Interessenwert gibt an, wie stark der Nutzer an dem angezeigten digitalen Inhalt interessiert ist. Ein hoher Interessenwert entspricht einer positiven Bewertung des digitalen Inhalts. Dagegen entspricht ein niedriger Interessenwert einer negativen Bewertung des digitalen Inhalts.

Der Server kann eine zentrale einheitliche Vorrichtung oder eine Mehrzahl von verteilten separaten Vorrichtungen sein. Beispielsweise kann der Server als eine Mehrzahl von Edge Cloud Servern ausgebildet sein, welche jeweils einen Bewertungsdienst betreiben. Bei dieser Wahl kann ein Netzwerk, beispielsweise ein Mobilfunknetz, für eine Verbindung zwischen dem Endgerät und dem Sensor einerseits und dem Bewertungsdienst andererseits eine besonders niedrige maximale Latenz bereitstellen.

Bevorzugt erfasst als der Sensor ein Sensor des Endgeräts und/oder ein Sensor eines während des Anzeigezeitraums von dem Nutzer verwendeten Smart Device das Reagieren des Nutzers. Viele Endgeräte, insbesondere Smartphones, umfassen eine Vielzahl von Sensoren zum Erfassen einer Position, einer Orientierung und/oder einer Beschleunigung des Endgeräts. Wenn der Nutzer das Endgerät während des Anzeigezeitraums in einer Hand hält und sich oder die Hand beim Konsumieren des digitalen Inhalts in Reaktion auf den angezeigten digitalen Inhalt bewegt, erfassen die Sensoren des Endgeräts das Bewegen und stellen zu dem erfassten Bewegen korrespondierende Reaktionsdaten bereit. Andere Endgeräte, insbesondere Notebooks, umfassen einen optischen Sensor, beispielsweise eine Kamera, welche beim Nutzen des Notebooks den Nutzer, insbesondere ein Gesicht des Nutzers, visuell erfasst.

Zu den Smart Devices gehören beispielsweise Smart Watches und Smart Clothes, welche der Nutzer üblicherweise am Körper trägt. Die Smart Devices umfassen zumindest einen Sensor, welcher einen Vitalparameter des Nutzers erfasst. Wenn der Nutzer das Smart Device während des Anzeigezeitraums trägt, erfassen die Sensoren des Smart Devices Vitalparameter des Nutzers und stellen zu den erfassten Vitalparametern korrespondierende Reaktionsdaten bereit. Viele Vitalparameter unterliegen nicht einer Kontrolle des Nutzers und weisen infolgedessen eine hohe Authentizität auf, d.h. die Vitalparameter können von dem Nutzer nicht manipuliert werden.

In günstigen Ausführungsformen werden ein Hautwiderstand, eine Pulsfrequenz, ein Blutdruck und/oder ein gestisches oder mimisches Bewegen des Nutzers als die zugeordneten Reaktionsdaten übertragen. Der Hautwiderstand, die Pulsfrequenz und der Blutdruck sind beispielhafte Vitalparameter, welche zu einer Entspannung und/oder Gleichgültigkeit bzw. einer Anspannung und/oder Erregung des Nutzers korrespondieren. Wenn der Nutzer angespannt und/oder erregt ist, ist der Hautwiderstand infolge einer Schweißproduktion niedrig, sind die Pulsfrequenz und der Blutdruck hoch. Umgekehrt ist der Hautwiderstand infolge einer Trockenheit hoch, sind die Pulsfrequenz und der Blutdruck niedrig, wenn der Nutzer entspannt und/oder gleichgültig ist.

Ebenso können ein Bewegen von Körperteilen des Nutzers, beispielsweise eine Kopfbewegung, ein Umhergehen, ein Aufspringen oder ein Hinsetzen, oder ein Gesichtsausdruck des Nutzers, beispielsweise ein Lachen, ein Lächeln oder eine Grimasse, zu einer Entspannung und/oder Gleichgültigkeit bzw. einer Anspannung und/oder Erregung des Nutzers korrespondieren. Auch eine zeitliche Variabilität der Pulsfrequenz ist zu einem physiologischen Zustand des Nutzers korreliert.

In vielen Ausführungsformen werden eine Produktinformation, ein Unterhaltungsinhalt und/oder ein Fachinhalt als der digitale Inhalt angezeigt. Die Produktinformation kann eine oder mehrere Produktseiten umfassen, welche ein bestellbares Produkt, insbesondere verschiedene Aspekte eines bestellbaren Produkts, beschreiben. Online-Shops ermöglichen üblicherweise ein Bestellen einer Mehrzahl von Produkten und umfassen eine Mehrzahl von Produktseiten. Zu den Unterhaltungsinhalten gehören Videoströme, beispielsweise Spielfilme oder Serienfolgen, und Audioströme, beispielsweise Podcasts oder Musikstücke. Wissenschaftliche Artikel oder Videos oder multimediale Ausbildungsinhalte zählen zu den Fachinhalten. Die Auflistung ist nicht einschränkend. Die Erfindung erstreckt sich auf jeden digitalen Inhalt, welchen ein Endgerät während eines Anzeigezeitraums anzeigen kann.

Idealerweise werden ein Typ des angezeigten digitalen Inhalts, eine inhaltliche Kategorie des angezeigten digitalen Inhalts, ein Anzeigeparameter des angezeigten digitalen Inhalts und/oder eine Seiteninformation betreffend den angezeigten digitalen Inhalt als die zugeordneten Metadaten übertragen. Die Metadaten klassifizieren den digitalen Inhalt inhaltlich und funktional. Zu den Typen gehören Videostrom, Audiostrom, Webseite und dergleichen. Zu den inhaltlichen Kategorien gehören Spielfilm, Serienfolge, Podcast, Musikstück, Genre, Szene, Produktinformation, Lieferumfang und dergleichen. Zu den Anzeigeparametern gehören das Anzeigen des digitalen Inhalts betreffende Konfigurationen oder Einstellungen des Endgeräts, beispielsweise eine Größe eines Displays, eine Helligkeit der Anzeige, eine graphische Auflösung der Anzeige, eine Lautstärke der Anzeige und dergleichen. Die Auflistung der Metadaten ist beispielhaft und nicht einschränkend.

Ein Datenempfangsmodul des Bewertungsdiensts kann die übertragenen Metadaten und die übertragenen Reaktionsdaten empfangen, die empfangenen Metadaten und/oder die empfangenen Reaktionsdaten normalisieren und/oder relevante Daten aus den empfangenen Metadaten und/oder den empfangenen Reaktionsdaten extrahieren und die normalisierten und/oder extrahierten Daten in einem dem Nutzer zugeordneten Interessenprofil einer Profildatenbank des Bewertungsdiensts speichern. Das Datenempfangsmodul dient allgemein einem Vorverarbeiten der empfangenen Daten.

Das Vorverarbeiten gewährleistet eine Unabhängigkeit des Interessenprofils von individuellen Ausprägungen des Endgeräts und/oder des Sensors und stellt eine Homogenität der Profildatenbank, d.h. eine identische Skalierung aller in der Profildatenbank gespeicherter Interessenprofile, sicher.

Das Vorverarbeiten gewährleistet ferner ein Verwerfen irrelevanter Daten. Auf diese Weise wird eine Größe des Interessenprofils reduziert. Beispielsweise können Reaktionsdaten irrelevant sein, deren Zeitstempel zu keinem Zeitstempel der Metadaten korrespondiert, welche sich also nicht konkret auf den angezeigten digitalen Inhalt oder einen zeitlichen Abschnitt des angezeigten digitalen Inhalts beziehen.

In manchen Ausführungsformen gewichtet der Datenempfangsdienst die normalisierten und/oder extrahierten Daten mittels von einem Zentraldienst ermittelter und mit Zeitstempeln versehener Konzentrationswerte des Nutzers. Das Vorverarbeiten gewährleistet weiterhin ein Berücksichtigen einer Konzentration des Nutzers während des Anzeigezeitraums.

Je konzentrierter der Nutzer den angezeigten digitalen Inhalt konsumiert, desto aussagekräftiger sind die Reaktionen des Nutzers auf den angezeigten digitalen Inhalt. Umgekehrt sind Reaktionen des Nutzers wenig aussagekräftig, wenn sich der Nutzer nicht auf den angezeigten digitalen Inhalt konzentriert. Ein hoher Konzentrationswert entspricht einer starken Fokussierung des Nutzers auf den angezeigten digitalen Inhalt. Dagegen entspricht ein niedriger Konzentrationswert einer starken Ablenkung des Nutzers von dem angezeigten digitalen Inhalt. Der Datenempfangsdienst verwendet die Konzentrationswerte zum Gewichten der Reaktionsdaten.

Der Zentraldienst gehört zu dem Netzwerk, welches das Endgerät und den Server verbindet. Der Zentraldienst kann konfiguriert sein, dem Nutzer eine Mehrzahl von gleichzeitigen Datenströmen zuzuordnen, wobei jeder Datenstrom zu einem von dem Nutzer konsumierten digitalen Inhalt korrespondiert. Je mehr Datenströme dem Nutzer während des Anzeigezeitraums zugeordnet werden, desto geringer ist seine Konzentration auf den von dem Endgerät angezeigten digitalen Inhalt.

In einer bevorzugten Ausführungsform erzeugt und/oder aktualisiert ein Modellierungsmodul des Bewertungsdiensts mittels der in dem Interessenprofil gespeicherten Daten ein Interessenmodell des Nutzers und ermittelt das Bewertungsmodul den Interessenwert mittels des erzeugten und/oder aktualisierten Interessenmodells. Das Modellierungsmodul transformiert das Interessenprofil des Nutzers in ein Interessenmodell des Nutzers, welches von dem Bewertungsmodul zum Ermitteln des Interessenwerts eines digitalen Inhalts verwendet wird.

Insbesondere trainiert das Modellierungsmodul zum Erzeugen und/oder Aktualisieren mit den in dem Interessenprofil gespeicherten Daten ein künstliches neuronales Netz des Bewertungsmoduls als das Interessenmodell. Das trainierte künstliche neuronale Netz modelliert das Interesse des Nutzers implizit und erlaubt ein besonders schnelles und genaues Ermitteln eines Interessenwerts eines digitalen Inhalts.

Ein weiterer Gegenstand der Erfindung ist ein Verfahren zum Bewerten eines digitalen Inhalts, bei dem eine von einem Server bereitgestellte Inhaltsdatenbank einen digitalen Inhalt für ein Endgerät bereitstellt und ein Bewertungsmodul eines von dem Server betriebenen Bewertungsdiensts einen Interessenwert des bereitgestellten digitalen Inhalts ermittelt und den ermittelten Interessenwert dem bereitgestellten digitalen Inhalt zugeordnet in der Inhaltsdatenbank speichert. Bewertungsverfahren für digitale Inhalte sind weit verbreitet. Entsprechend finden sich viele Anwendungsfälle für die Erfindung.

Erfindungsgemäß ermittelt das Bewertungsmodul den Interessenwert im Zusammenwirken mit dem Endgerät und einem Sensor in einem erfindungsgemäßen Verfahren. Das Bewertungsmodul kommt ohne ein absichtsvolles aktives Mitwirken des Nutzers, d.h. ohne ein Abgeben einer Bewertung, aus. Der von dem Bewertungsmodul ermittelte Interessenwert, welcher einer Bewertung gleichkommt, weist zudem eine hohe Präzision auf.

Ein dritter Gegenstand der Erfindung ist ein Verfahren zum Empfehlen eines digitalen Inhalts, bei dem eine von dem Server bereitgestellte Inhaltsdatenbank einen digitalen Inhalt für ein Endgerät bereitstellt und ein Bewertungsmodul eines von dem Server betriebenen Bewertungsdiensts einen Interessenwert des bereitgestellten digitalen Inhalts ermittelt, ein von dem Server betriebener Empfehlungsdienst eine Empfehlung für den bereitgestellten digitalen Inhalt abhängig von dem ermittelten Interessenwert bestimmt und zu dem Endgerät überträgt und das Endgerät die bestimmte Empfehlung anzeigt. Bewertungsverfahren für digitale Inhalte sind weit verbreitet. Entsprechend finden sich viele Anwendungsfälle für die Erfindung.

Erfindungsgemäß ermittelt das Bewertungsmodul den Interessenwert im Zusammenwirken mit dem Endgerät und einem Sensor in einem erfindungsgemäßen Verfahren. Das Bewertungsmodul kommt ohne ein absichtsvolles aktives Mitwirken des Nutzers, d.h. ohne ein Abgeben einer Bewertung, aus. Die von dem Empfehlungsdienst bestimmte Empfehlung passt zudem präzise zu einem Interesse des Nutzers. Infolgedessen motiviert die bestimmte Empfehlung den Nutzer zielgenau zu einem Konsumieren des digitalen Inhalts, hat also die angestrebte Wirkung.

Bevorzugt wird die Empfehlung für den bereitgestellten digitalen Inhalt bestimmt, wenn der ermittelte Interessenwert des bereitgestellten digitalen Inhalts größer ist als ein vorbestimmter Schwellwert. Mittels des Schwellwerts können für den Nutzer äußerst interessante digitale Inhalte von für den Nutzer weniger interessanten digitalen Inhalten unterschieden werden. Auf diese Weise wird eine Wirkung der bestimmten Empfehlung weiter verbessert.

Idealerweise vergleicht ein von dem Server betriebener Filterdienst die bestimmte Empfehlung mit persönlichen Daten des Nutzers und/oder mit von einem separaten Empfehlungsdienst bestimmten weiteren Empfehlungen für den Nutzer und lässt ein Übertragen der bestimmten Empfehlung zu dem Endgerät dann und nur dann zu, wenn die bestimmte Empfehlung mit den persönlichen Daten oder den weiteren Empfehlungen konsistent ist. Der Filterdienst berücksichtigt persönliche Daten des Nutzers, beispielsweise ein Alter, ein Geschlecht, einen Familienstand des Nutzers, sowie auf herkömmliche Weise durch indirektes Ableiten ermittelte Empfehlungen. Der Filterdienst erhöht eine Präzision der bestimmten Empfehlung weiter.

Ein vierter Gegenstand ist ein Verfahren zum Fördern eines Konsums eines digitalen Inhalts, bei dem ein Bewertungsmodul eines von einem Server betriebenen Bewertungsdiensts einen Interessenwert eines von einem Endgerät angezeigten digitalen Inhalts ermittelt, das Bewertungsmodul abhängig von dem ermittelten Interessenwert einen Konsumanreiz für den angezeigten digitalen Inhalt bestimmt und zu dem Endgerät überträgt und das Endgerät den bestimmten Konsumanreiz während des Anzeigezeitraums anzeigt. Konsumförderverfahren für digitale Inhalte sind weit verbreitet. Entsprechend finden sich viele Anwendungsfälle für die Erfindung.

Zu den Konsumanreizen gehören beispielsweise ein Rabatt für den digitalen Inhalt oder ein zu dem digitalen Inhalt korrespondierenden bestellbaren Produkt, eine günstige Kombination des digitalen Inhalts mit einem weiteren digitalen Inhalt oder einem zu dem weiteren digitalen Inhalt korrespondierenden weiteren bestellbaren Produkt, ein kostenloser Transport oder eine zügige Lieferung von bestellbaren Produkten.

Erfindungsgemäß ermittelt das Bewertungsmodul den Interessenwert im Zusammenwirken mit dem Endgerät und einem Sensor in einem erfindungsgemäßen Verfahren. Der von dem Bewertungsdienst bestimmte Konsumanreiz passt zudem präzise zu einem Interesse des Nutzers. Infolgedessen motiviert der bestimmte Konsumanreiz den Nutzer zielgenau zu einem Konsumieren des digitalen Inhalts, hat also die angestrebte Wirkung. Insbesondere wird der Konsumanreiz während des Anzeigezeitraums eines für den Nutzer interessanten digitalen Inhalts, d.h. in Echtzeit, angezeigt, wodurch die Wirkung des Konsumanreizes weiter verstärkt ist.

Ein fünfter Gegenstand der Erfindung ist ein Computerprogrammprodukt, umfassend ein von einem Server lesbares Speichermedium mit einem von dem Server ausführbaren Programmcode, welcher den Server veranlasst, einen Bewertungsdienst oder einen Empfehlungsdienst zu betreiben, wenn der Programmcode von einem Prozessor des Servers ausgeführt wird. Die Speichervorrichtung kann als ein bezogen auf den Server externes Speichermedium wie eine CD-ROM, eine DVD, ein USB-Stick, ein Cloudspeicher und dergleichen oder als ein bezogen auf den Server internes Speichermedium wie einen Arbeitsspeicher oder eine Festplatte ausgebildet sein. Abgesehen davon kann das Computerprogramm für ein sofortiges Ausführen des Programmcodes oder ein Ausführen des Programmcodes nach einem vorherigen Installierens auf dem Server vorgesehen sein.

Erfindungsgemäß sind der Bewertungsdienst oder der Empfehlungsdienst konfiguriert, im Zusammenwirken mit einem Endgerät und einem Sensor ein erfindungsgemäßes Verfahren auszuführen. Das Computerprogrammprodukt implementiert ein Bewertungsverfahren, ein Empfehlungsverfahren und ein Konsumförderverfahren, welches ohne ein absichtsvolles aktives Mitwirken eines einen digitalen Inhalt konsumierenden Nutzers auskommt und eine hohe Präzision des ermittelten Interesses des Nutzers an dem konsumierten digitalen Inhalt erreicht.

Ein wesentlicher Vorteil des erfindungsgemäßen Verfahrens besteht darin, dass ein Interesse eines Nutzers an einem digitalen Inhalt ohne ein aktives absichtsvolles Mitwirken des Nutzers und zudem mit einer hohen Präzision ermittelt wird. Ein weiterer Vorteil ist darin zu sehen, dass sich dank dem erfindungsgemäßen Verfahren eine relevante Empfehlung eines digitalen Inhalts ermitteln und ein Konsum eines von einem Endgerät angezeigten digitalen Inhalts in Echtzeit fördern lässt.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben. Es zeigt
- Fig. 1: ein Anwendungsfalldiagramm einer Ausführungsform eines erfindungsgemäßen Verfahrens zum Bewerten eines digitalen Inhalts;
- Fig. 2: ein Anwendungsfalldiagramm einer ersten Ausführungsform eines erfindungsgemäßen Verfahrens zum Empfehlen eines digitalen Inhalts;
- Fig. 3: ein Anwendungsfalldiagramm einer zweiten Ausführungsform eines erfindungsgemäßen Verfahrens zum Empfehlen eines digitalen Inhalts.

In der Zeichnung sind korrespondierende Merkmale mit identischen Bezugszeichen versehen.

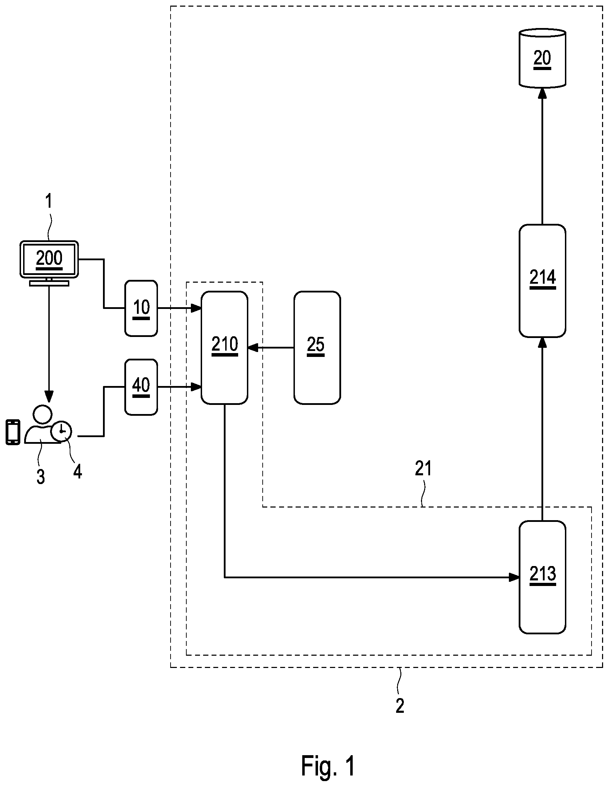

Fig. 1 zeigt ein Anwendungsfalldiagramm einer Ausführungsform eines erfindungsgemäßen Verfahrens zum Bewerten eines digitalen Inhalts 200. Bei dem Verfahren stellt eine von einem Server 2 bereitgestellte Inhaltsdatenbank 20 einen digitalen Inhalt 200 für ein Endgerät 1 bereit. Das Endgerät 1 kann als ein TV-Gerät - wie hier gezeigt -, ein Desktop-Rechner, ein Notebook, ein Tablet oder ein Smartphone ausgebildet sein.

Ein Bewertungsmodul 213 eines von dem Server 2 betriebenen Bewertungsdiensts 21 ermittelt im Zusammenwirken mit dem Endgerät 1 und einem Sensor 4 in einem nachstehend beschriebenen Verfahren einen Interessenwert 214 des bereitgestellten digitalen Inhalts 200 als ein Interesse an dem digitalen Inhalt 200 und speichert den ermittelten Interessenwert 214 dem bereitgestellten digitalen Inhalt 200 zugeordnet in der Inhaltsdatenbank 20.

Der Bewertungsdienst 21 wird beispielsweise mittels eines Computerprogrammprodukts in dem Server 2 implementiert. Das Computerprogrammprodukt umfasst ein von dem Server 2 lesbares Speichermedium mit einem von dem Server 2 ausführbaren Programmcode. Der Programmcode veranlasst den Server 2, den Bewertungsdienst 21 für den digitalen Inhalt 200 zu betreiben, welcher konfiguriert ist, im Zusammenwirken mit dem Endgerät 1 und dem Sensor 4 das nachstehend beschriebene Verfahren auszuführen, wenn der Programmcode von einem Prozessor des Servers 2 ausgeführt wird.

Bei dem Verfahren zum Ermitteln des Interesses an dem digitalen Inhalts 200 zeigt das Endgerät 1 eines Nutzers 3 dem Nutzer 3 während eines Anzeigezeitraums den digitalen Inhalt 200 an. Vorzugsweise werden eine Produktinformation, ein Unterhaltungsinhalt - wie hier gezeigt - und/oder ein Fachinhalt als der digitale Inhalt 200 angezeigt.

Das Endgerät 1 stellt Metadaten 10 bereit, welche dem angezeigten digitalen Inhalt 200 zugeordnet und mit zu dem Anzeigezeitraum gehörigen Zeitstempeln versehen sind, und überträgt die bereitgestellten Metadaten 10 zu einem von dem Endgerät 1 verschiedenen Server 2. Vorzugsweise werden als die zugeordneten Metadaten 10 ein Typ des angezeigten digitalen Inhalts 200, eine inhaltliche Kategorie des angezeigten digitalen Inhalts 200, ein Anzeigeparameter des angezeigten digitalen Inhalts 200 und/oder eine Seiteninformation betreffend den angezeigten digitalen Inhalt 200 übertragen.

Ein Sensor 4 erfasst während des Anzeigezeitraums ein Reagieren des Nutzers 3 auf den angezeigten digitalen Inhalt 200 und stellt von dem Reagieren abhängige und mit zu dem Anzeigezeitraum gehörigen Zeitstempeln versehene Sensordaten als zu einem Interesse des Nutzers 3 an dem angezeigten digitalen Inhalt 200 korrespondierende Reaktionsdaten 40 bereit. Der Sensor 4 überträgt die bereitgestellten Reaktionsdaten 40 zu dem Server 2. Als der Sensor 4 kann ein Sensor des Endgeräts 1 und/oder - wie hier beispielhaft gezeigt - ein Sensor eines während des Anzeigezeitraums von dem Nutzer 3 verwendeten Smart Device das Reagieren des Nutzers 3 erfassen. Vorzugsweise werden ein Hautwiderstand, eine Pulsfrequenz, ein Blutdruck und/oder ein gestisches oder mimisches Bewegen des Nutzers 3 als die zugeordneten Reaktionsdaten 40 übertragen.

Vorteilhaft empfängt ein Datenempfangsmodul 210 des Bewertungsdiensts 21 die übertragenen Metadaten 10 und die übertragenen Reaktionsdaten 40 und normalisiert das Datenempfangsmodul 210 die empfangenen Metadaten 10 und/oder die empfangenen Reaktionsdaten 40 und/oder extrahiert das Datenempfangsmodul 210 relevante Daten aus den empfangenen Metadaten 10 und/oder den empfangenen Reaktionsdaten 40.

Das Datenempfangsmodul 210 kann die normalisierten und/oder extrahierten Daten mittels von einem Zentraldienst 25 ermittelter und mit Zeitstempeln versehener Konzentrationswerte des Nutzers 3 gewichten.

Das Bewertungsmodul 213 des von dem Server 2 betriebenen Bewertungsdiensts 21 ermittelt abhängig von den empfangenen Metadaten 10 und den empfangenen Reaktionsdaten 40 den Interessenwert 214 des digitalen Inhalts 200 als das Interesse des Nutzers 3 an dem angezeigten digitalen Inhalt 200.

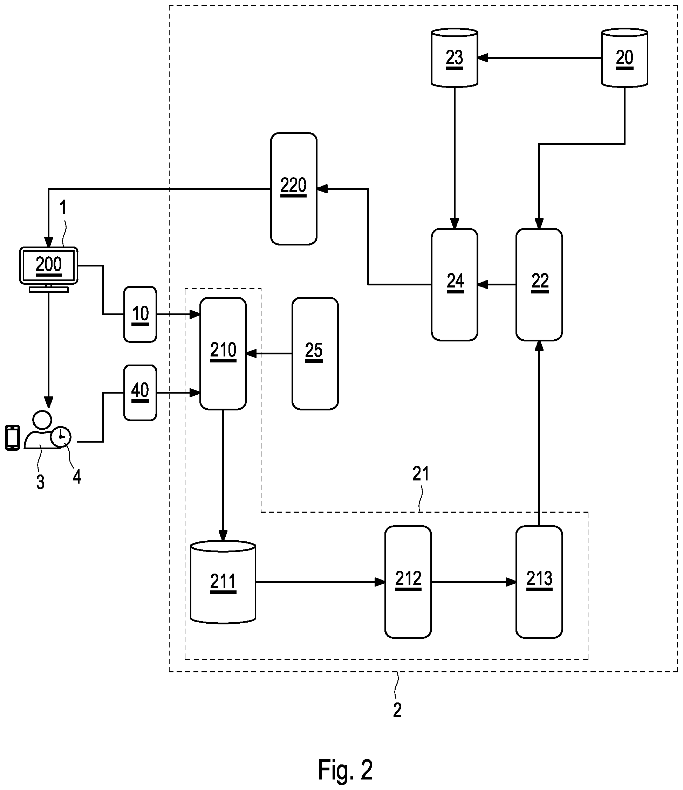

Fig. 2 zeigt ein Anwendungsfalldiagramm einer ersten Ausführungsform eines erfindungsgemäßen Verfahrens zum Empfehlen eines digitalen Inhalts. Bei dem Verfahren stellt eine von einem Server 2 bereitgestellte Inhaltsdatenbank 20 einen digitalen Inhalt 200 für ein Endgerät 1 bereit. Das Endgerät 1 kann als ein TV-Gerät - wie hier gezeigt -, ein Desktop-Rechner, ein Notebook, ein Tablet oder ein Smartphone ausgebildet sein.

Ein Bewertungsmodul 213 eines von dem Server 2 betriebenen Bewertungsdiensts 21 ermittelt im Zusammenwirken mit dem Endgerät 1 und einem Sensor 4 in einem nachstehend beschriebenen Verfahren einen Interessenwert 214 des bereitgestellten digitalen Inhalts 200 als ein Interesse an dem digitalen Inhalt 200.

Der Bewertungsdienst 21 wird beispielsweise mittels eines Computerprogrammprodukts in dem Server 2 implementiert. Das Computerprogrammprodukt umfasst ein von dem Server 2 lesbares Speichermedium mit einem von dem Server 2 ausführbaren Programmcode. Der Programmcode veranlasst den Server 2, den Bewertungsdienst 21 für den digitalen Inhalt 200 zu betreiben, welcher konfiguriert ist, im Zusammenwirken mit dem Endgerät 1 und dem Sensor 4 das nachstehend beschriebene Verfahren auszuführen, wenn der Programmcode von einem Prozessor des Servers 2 ausgeführt wird.

Ein von dem Server 2 betriebener Empfehlungsdienst 22 bestimmt eine Empfehlung 220 für den bereitgestellten digitalen Inhalt 200 abhängig von dem ermittelten Interessenwert 214 und überträgt die bestimmte Empfehlung 220 zu dem Endgerät 1. Die Empfehlung 220 für den bereitgestellten digitalen Inhalt 200 wird beispielsweise bestimmt, wenn der ermittelte Interessenwert 214 des bereitgestellten digitalen Inhalts 200 größer ist als ein vorbestimmter Schwellwert.

Der Empfehlungsdienst 22 wird beispielsweise mittels eines Computerprogrammprodukts in dem Server 2 implementiert. Das Computerprogrammprodukt umfasst ein von dem Server 2 lesbares Speichermedium mit einem von dem Server 2 ausführbaren Programmcode. Der Programmcode veranlasst den Server 2, den Empfehlungsdienst 22 für den digitalen Inhalt 200 zu betreiben, welcher konfiguriert ist, im Zusammenwirken mit dem Endgerät 1 und dem Sensor 4 das vorstehend beschriebene Verfahren auszuführen, wenn der Programmcode von einem Prozessor des Servers 2 ausgeführt wird.

Das Endgerät 1 zeigt die übertragene Empfehlung 220 an.

Bei dem Verfahren zum Ermitteln des Interesses an dem digitalen Inhalts 200 zeigt das Endgerät 1 eines Nutzers 3 dem Nutzer 3 während eines Anzeigezeitraums den digitalen Inhalt 200 an. Vorzugsweise werden eine Produktinformation, ein Unterhaltungsinhalt - wie hier gezeigt - und/oder ein Fachinhalt als der digitale Inhalt 200 angezeigt.

Das Endgerät 1 stellt Metadaten 10 bereit, welche dem angezeigten digitalen Inhalt 200 zugeordnet und mit zu dem Anzeigezeitraum gehörigen Zeitstempeln versehen sind, und überträgt die bereitgestellten Metadaten 10 zu einem von dem Endgerät 1 verschiedenen Server 2. Vorzugsweise werden als die zugeordneten Metadaten 10 ein Typ des angezeigten digitalen Inhalts 200, eine inhaltliche Kategorie des angezeigten digitalen Inhalts 200, ein Anzeigeparameter des angezeigten digitalen Inhalts 200 und/oder eine Seiteninformation betreffend den angezeigten digitalen Inhalt 200 übertragen.

Ein Sensor 4 erfasst während des Anzeigezeitraums ein Reagieren des Nutzers 3 auf den angezeigten digitalen Inhalt 200 und stellt von dem Reagieren abhängige und mit zu dem Anzeigezeitraum gehörigen Zeitstempeln versehene Sensordaten als zu einem Interesse des Nutzers 3 an dem angezeigten digitalen Inhalt 200 korrespondierende Reaktionsdaten 40 bereit. Der Sensor 4 überträgt die bereitgestellten Reaktionsdaten 40 zu dem Server 2. Als der Sensor 4 kann ein Sensor des Endgeräts 1 und/oder - wie hier beispielhaft gezeigt - ein Sensor eines während des Anzeigezeitraums von dem Nutzer 3 verwendeten Smart Device das Reagieren des Nutzers 3 erfassen. Vorzugsweise werden ein Hautwiderstand, eine Pulsfrequenz, ein Blutdruck und/oder ein gestisches oder mimisches Bewegen des Nutzers 3 als die zugeordneten Reaktionsdaten 40 übertragen.

Vorteilhaft empfängt ein Datenempfangsmodul 210 des Bewertungsdiensts 21 die übertragenen Metadaten 10 und die übertragenen Reaktionsdaten 40 und normalisiert das Datenempfangsmodul 210 die empfangenen Metadaten 10 und/oder die empfangenen Reaktionsdaten 40 und/oder extrahiert das Datenempfangsmodul 210 relevante Daten aus den empfangenen Metadaten 10 und/oder den empfangenen Reaktionsdaten 40.

Vorteilhaft empfängt ein Datenempfangsmodul 210 des Bewertungsdiensts 21 die übertragenen Metadaten 10 und die übertragenen Reaktionsdaten 40 und normalisiert das Datenempfangsmodul 210 die empfangenen Metadaten 10 und/oder die empfangenen Reaktionsdaten 40 und/oder extrahiert das Datenempfangsmodul 210 relevante Daten aus den empfangenen Metadaten 10 und/oder den empfangenen Reaktionsdaten 40. Das Datenempfangsmodul 210 speichert die normalisierten und/oder extrahierten Daten in einem dem Nutzer 3 zugeordneten Interessenprofil einer Profildatenbank 211 des Bewertungsdiensts 21.

Das Datenempfangsmodul 210 kann die normalisierten und/oder extrahierten Daten vor dem Speichern mittels von einem Zentraldienst 25 ermittelter und mit Zeitstempeln versehener Konzentrationswerte des Nutzers 3 gewichten.

Ein Modellierungsmodul 212 des Bewertungsdiensts 21 kann mittels der in dem Interessenprofil gespeicherten Daten ein Interessenmodell des Nutzers 3 erzeugen und/oder aktualisieren. Insbesondere trainiert das Modellierungsmodul 212 zum Erzeugen und/oder Aktualisieren mit den in dem Interessenprofil gespeicherten Daten ein künstliches neuronales Netz des Bewertungsmoduls 213 als das Interessenmodell.

Das Bewertungsmodul 213 des von dem Server 2 betriebenen Bewertungsdiensts 21 ermittelt abhängig von den empfangenen Metadaten 10 und den empfangenen Reaktionsdaten 40, d.h. mittels des erzeugten und/oder aktualisierten Interessenmodells, den Interessenwert 214 des digitalen Inhalts 200 als das Interesse des Nutzers 3 an dem angezeigten digitalen Inhalt 200.

Ein von dem Server 2 betriebener Filterdienst 24 vergleicht die bestimmte Empfehlung 220 mit persönlichen Daten des Nutzers 3 und/oder mit von einem separaten Empfehlungsdienst 23 bestimmten weiteren Empfehlungen für den Nutzer 3 und lässt ein Übertragen der bestimmten Empfehlung 220 zu dem Endgerät 1 dann und nur dann zu, wenn die bestimmte Empfehlung 220 mit den persönlichen Daten oder den weiteren Empfehlungen konsistent ist.

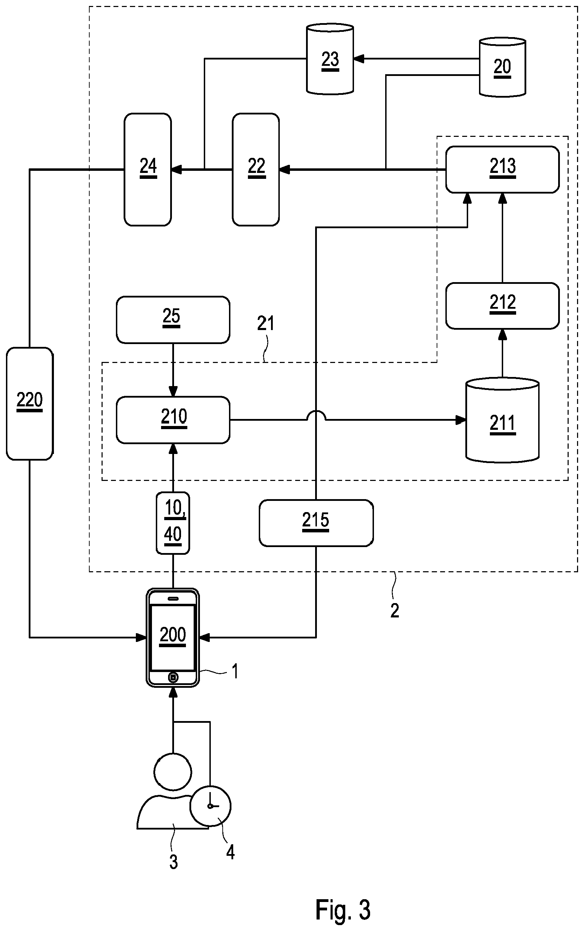

Fig. 3 zeigt ein Anwendungsfalldiagramm einer zweiten Ausführungsform eines erfindungsgemäßen Verfahrens zum Empfehlen eines digitalen Inhalts 200. Das Verfahren entspricht im Wesentlichen dem in Fig. 2 gezeigten Verfahren. Abweichend sind hier ein als ein Smartphone ausgebildetes Endgerät 1 gezeigt und wird von dem Endgerät 1 eine Produktinformation als der digitale Inhalt 200 angezeigt.

Zusätzlich wird das nachstehend beschriebene Verfahren zum Fördern eines Konsums des digitalen Inhalts 200 ausgeführt.

Das Bewertungsmodul 213 ermittelt den Interessenwert 214 des von dem Endgerät 1 angezeigten digitalen Inhalts 200, bestimmt abhängig von dem ermittelten Interessenwert 214 einen Konsumanreiz 215 für den angezeigten digitalen Inhalt 200 und überträgt den bestimmten Konsumanreiz 215 zu dem Endgerät 1. Das Endgerät 1 zeigt den bestimmten Konsumanreiz 215 während des Anzeigezeitraums an.

### Bezugszeichenliste

- 1: Endgerät
- 10: Metadaten
- 2: Server
- 20: Inhaltsdatenbank
- 200: digitaler Inhalt
- 21: Bewertungsdienst
- 210: Datenempfangsmodul
- 211: Profildatenbank
- 212: Modellierungsmodul
- 213: Bewertungsmodul
- 214: Interessenwert
- 215: Konsumanreiz
- 22: Empfehlungsdienst
- 220: Empfehlung
- 23: fremder Empfehlungsdienst
- 24: Filterdienst
- 25: Zentraldienst
- 3: Nutzer
- 4: Sensor
- 40: Reaktionsdaten

## Patentansprüche

1. Verfahren zum Ermitteln eines Interesses an einem digitalen Inhalt (200), bei dem
- ein Endgerät (1) eines Nutzers (3) dem Nutzer (3) während eines Anzeigezeitraums einen digitalen Inhalt (200) anzeigt;
- ein Sensor (4) während des Anzeigezeitraums ein Reagieren des Nutzers (3) auf den angezeigten digitalen Inhalt (200) erfasst und von dem Reagieren abhängige und mit zu dem Anzeigezeitraum gehörigen Zeitstempeln versehene Sensordaten als zu einem Interesse des Nutzers (3) an dem angezeigten digitalen Inhalt (200) korrespondierende Reaktionsdaten (40) bereitstellt;
- das Endgerät (1) dem angezeigten digitalen Inhalt (200) zugeordnete und mit zu dem Anzeigezeitraum gehörigen Zeitstempeln versehene Metadaten (10) bereitstellt und die bereitgestellten Metadaten (10) zu einem von dem Endgerät (1) verschiedenen Server (2) überträgt;
- der Sensor (4) die bereitgestellten Reaktionsdaten (40) zu dem Server (2) überträgt;
- ein Bewertungsmodul (213) eines von dem Server (2) betriebenen Bewertungsdiensts (21) abhängig von den empfangenen Metadaten (10) und den empfangenen Reaktionsdaten (40) einen Interessenwert (214) des digitalen Inhalts (200) als das Interesse des Nutzers (3) an dem angezeigten digitalen Inhalt (200) ermittelt.

2. Verfahren nach Anspruch 1, bei dem als der Sensor (4) ein Sensor des Endgeräts (1) und/oder ein Sensor eines während des Anzeigezeitraums von dem Nutzer (3) verwendeten Smart Device das Reagieren des Nutzers (3) erfasst.

3. Verfahren nach Anspruch 1 oder 2, bei dem ein Hautwiderstand, eine Pulsfrequenz, ein Blutdruck und/oder ein gestisches oder mimisches Bewegen des Nutzers (3) als die zugeordneten Reaktionsdaten (40) übertragen werden.

4. Verfahren nach einem der Ansprüche 1 bis 3, bei dem eine Produktinformation, ein Unterhaltungsinhalt und/oder ein Fachinhalt als der digitale Inhalt (200) angezeigt werden.

5. Verfahren nach einem der Ansprüche 1 bis 4, bei dem als die zugeordneten Metadaten (10) ein Typ des angezeigten digitalen Inhalts (200), eine inhaltliche Kategorie des angezeigten digitalen Inhalts (200), einen Anzeigeparameter des angezeigten digitalen Inhalts (200) und/oder eine Seiteninformation betreffend den angezeigten digitalen Inhalt (200) übertragen werden.

6. Verfahren nach einem der Ansprüche 1 bis 5, bei dem ein Datenempfangsmodul (210) des Bewertungsdiensts (21) die übertragenen Metadaten (10) und die übertragenen Reaktionsdaten (40) empfängt, die empfangenen Metadaten (10) und/oder die empfangenen Reaktionsdaten (40) normalisiert und/oder relevante Daten aus den empfangenen Metadaten (10) und/oder den empfangenen Reaktionsdaten (40) extrahiert und die normalisierten und/oder extrahierten Daten in einem dem Nutzer (3) zugeordneten Interessenprofil einer Profildatenbank (211) des Bewertungsdiensts (21) speichert.

7. Verfahren nach Anspruch 6, bei dem das Datenempfangsmodul (210) die normalisierten und/oder extrahierten Daten mittels von einem Zentraldienst (25) ermittelter und mit Zeitstempeln versehener Konzentrationswerte des Nutzers (3) gewichtet.

8. Verfahren nach Anspruch 6 oder 7, bei dem ein Modellierungsmodul (212) des Bewertungsdiensts (21) mittels der in dem Interessenprofil gespeicherten Daten ein Interessenmodell des Nutzers (3) erzeugt und/oder aktualisiert und das Bewertungsmodul (213) den Interessenwert (214) mittels des erzeugten und/oder aktualisierten Interessenmodells ermittelt.

9. Verfahren nach Anspruch 8, bei dem das Modellierungsmodul (212) zum Erzeugen und/oder Aktualisieren mit den in dem Interessenprofil gespeicherten Daten ein künstliches neuronales Netz des Bewertungsmoduls (213) als das Interessenmodell trainiert.

10. Verfahren zum Bewerten eines digitalen Inhalts (200), bei dem eine von einem Server (2) bereitgestellte Inhaltsdatenbank (20) einen digitalen Inhalt (200) für ein Endgerät (1) bereitstellt und ein von dem Server (2) betriebener Bewertungsdienst (21) im Zusammenwirken mit dem Endgerät (1) und einem Sensor (4) in einem Verfahren nach einem der Ansprüche 1 bis 9 einen Interessenwert (214) des bereitgestellten digitalen Inhalts (200) ermittelt und den ermittelten Interessenwert (214) dem bereitgestellten digitalen Inhalt (200) zugeordnet in der Inhaltsdatenbank (20) speichert.

11. Verfahren zum Empfehlen eines digitalen Inhalts (200), bei dem eine von dem Server (2) bereitgestellte Inhaltsdatenbank (20) einen digitalen Inhalt (200) für ein Endgerät (1) bereitstellt und ein Bewertungsmodul (213) eines von dem Server (2) betriebenen Bewertungsdiensts (21) im Zusammenwirken mit dem Endgerät (1) und einem Sensor (4) in einem Verfahren nach einem der Ansprüche 1 bis 9 einen Interessenwert (214) des bereitgestellten digitalen Inhalts (200) ermittelt, ein von dem Server (2) betriebener Empfehlungsdienst (22) eine Empfehlung (220) für den bereitgestellten digitalen Inhalt (200) abhängig von dem ermittelten Interessenwert (214) bestimmt und zu dem Endgerät (1) überträgt und das Endgerät (1) die bestimmte Empfehlung (220) anzeigt.

12. Verfahren nach Anspruch 11, bei dem die Empfehlung (220) für den bereitgestellten digitalen Inhalt (200) bestimmt wird, wenn der ermittelte Interessenwert (214) des bereitgestellten digitalen Inhalts (200) größer ist als ein vorbestimmter Schwellwert.

13. Verfahren nach Anspruch 11 oder 12, bei dem ein von dem Server (2) betriebener Filterdienst (24) die bestimmte Empfehlung (220) mit persönlichen Daten des Nutzers (3) und/oder mit von einem separaten Empfehlungsdienst (23) bestimmten weiteren Empfehlungen für den Nutzer (3) vergleicht und ein Übertragen der bestimmten Empfehlung (220) zu dem Endgerät (1) dann und nur dann zulässt, wenn die bestimmte Empfehlung (220) mit den persönlichen Daten oder den weiteren Empfehlungen konsistent ist.

14. Verfahren zum Fördern eines Konsums eines digitalen Inhalts (200), bei dem ein Bewertungsmodul (213) eines von einem Server (2) betriebenen Bewertungsdiensts (21) im Zusammenwirken mit einem Endgerät (1) und einem Sensor (4) in einem Verfahren nach einem der Ansprüche 1 bis 9 einen Interessenwert (214) eines von dem Endgerät (1) angezeigten digitalen Inhalts (200) ermittelt, das Bewertungsmodul (213) abhängig von dem ermittelten Interessenwert (214) einen Konsumanreiz (215) für den angezeigten digitalen Inhalt (200) bestimmt und zu dem Endgerät (1) überträgt und das Endgerät (1) den bestimmten Konsumanreiz (215) während des Anzeigezeitraums anzeigt.

15. Computerprogrammprodukt, umfassend ein von einem Server (2) lesbares Speichermedium mit einem von dem Server (2) ausführbaren Programmcode, welcher den Server (2) veranlasst, einen Bewertungsdienst (21) für einen digitalen Inhalt (200) oder einen Empfehlungsdienst (22) für einen digitalen Inhalt (200) zu betreiben, welche jeweils konfiguriert sind, im Zusammenwirken mit einem Endgerät (1) und einem Sensor (4) ein Verfahren nach einem der Ansprüche 1 bis 9 oder ein Verfahren nach einem der Ansprüche 10 bis 14 auszuführen, wenn der Programmcode von einem Prozessor des Servers (2) ausgeführt wird.
